# FASCICULE DE BREVET EUROPEEN

(11) **EP 3 024 698 B1**
(45) Date de publication et mention de la délivrance du brevet: **15.08.2018**
(21) Numéro de dépôt: 14758592.1
(22) Date de dépôt: 24.07.2014
(51) Int. Cl.: B60Q 3/00, F21V 8/00, G09F 13/04

(54) **DISPOSITIF LUMINEUX**
LEUCHTVORRICHTUNG
LIGHTING DEVICE

(30) Priorité: 25.07.2013 FR 1301790
(43) Date de publication de la demande: 01.06.2016
(73) Titulaire: Valeo Systemes Thermiques, 78320 Le Mesnil Saint Denis (FR)
(72) Inventeur: THORAILLER Maryline, F-78320 le Mesnil Saint Dénis (FR); BOMBARD Stéphane, F-78320 le Mesnil Saint Dénis (FR)
(74) Mandataire: Pothmann, Karsten
(86) Numéro de dépôt international: PCT/FR2014/000176
(87) Numéro de publication internationale: WO 2015/011348

(56) Documents cités:
- DE-A1-102004 047 653
- FR-A1- 2 833 688
- JP-A- 2005 331 289
- US-A- 6 164 805
- US-A1- 2006 227 568
- US-A1- 2008 074 865

## Description

La présente invention concerne un dispositif lumineux, notamment pour véhicule automobile. L'invention se rapporte également à un témoin lumineux comprenant un dispositif lumineux selon l'invention ainsi qu'à un tableau de commande de véhicule automobile comprenant un dispositif lumineux selon l'invention.

Le nombre de dispositifs lumineux présents dans l'habitacle d'un véhicule automobile augmente avec la sophistication des véhicules. Certains de ces dispositifs lumineux sont amenés à être entrainés en rotation par l'utilisateur. Ce type de dispositif lumineux tournant comprend généralement un index lumineux. Cet index lumineux permet généralement à l'utilisateur de visualiser une commande activée par la rotation du dispositif.

Afin d'obtenir cet éclairage homogène, il est possible d'utiliser autant de sources lumineuses que de positions possibles de l'index lumineux. Cependant, l'utilisation d'un grand nombre de sources lumineuses présente des difficultés de mise en oeuvre, en particulier en termes d'encombrement et d'alimentation électrique.

Une solution existante consiste à utiliser un collecteur de lumière éclairé par une ou plusieurs sources de lumière. Le collecteur de lumière a une forme circulaire et est couplé à l'index lumineux. De tels dispositifs permettent d'obtenir un éclairage de l'index en limitant le nombre de source de lumière. Un tel dispositif est divulgué par exemple dans le document JP2005331289. Cependant, ces dispositifs présentent des défauts de couplage entre le collecteur de lumière et l'index lumineux. Ainsi, le rendu visuel pour l'utilisateur n'est pas homogène. En particulier, l'intensité lumineuse de l'index lumineux n'est pas perçue comme identique en fonction des différentes positions de l'index lumineux.

Ainsi, il existe un besoin pour fournir un dispositif lumineux permettant un éclairage homogène de l'index lumineux tout en ayant un nombre réduit de sources de lumière.

L'invention propose ainsi un dispositif lumineux tel que défini dans la revendication 1. Avantageusement, la configuration des guides de captage du dispositif lumineux selon l'invention permet d'obtenir un éclairage homogène au niveau des extrémités de sortie des guides de captage.

En particulier, les extrémités d'entrée des guides de captage pénétrant tangentiellement au collecteur, le couplage entre ces guides et le collecteur est grandement amélioré.

Le dispositif selon l'invention peut également comprendre une ou plusieurs des caractéristiques ci-dessous, considérées individuellement ou selon toutes les combinaisons techniquement possibles :
- le collecteur de lumière a une section circulaire ; et/ou
- le collecteur de lumière est configuré de sorte que R>4,5*d3 avec R le rayon intérieur du collecteur de lumière et d3 le diamètre de la section du collecteur ; et/ou
- le collecteur comprend un méplat disposé face à ladite au moins une source de lumière ; et/ou
- le méplat du collecteur comprend des éléments dispersifs sous forme de prisme ; et/ou
- les prismes sont radiaux au collecteur ; et/ou
- les prismes ont un angle au sommet de 90° ; et/ou
- les guides de captage s'étendent dans une direction sensiblement perpendiculaire au plan moyen du collecteur de lumière ; et/ou
- les guides de captage ont des sections circulaires ; et/ou
- les sections circulaires des guides de captage sont sensiblement de même diamètre ; et/ou
- les diamètres des guides de captage sont inférieurs au diamètre du collecteur de lumière ; et/ou
- le rayon de courbure des guides de captage au niveau de leurs extrémités d'entrée est supérieur à 4,5 fois le diamètre de la section du collecteur ; et/ou
- ladite au moins une source lumineuse comprend au moins une diode électroluminescente disposée en regard du collecteur de lumière ; et/ou
- le collecteur de lumière et les guides de captage sont monoblocs.

L'invention se rapporte également à un témoin lumineux destiné notamment à un tableau de commande d'un véhicule automobile comprenant un dispositif lumineux selon l'invention.

L'invention se rapporte en outre à un tableau de commande de véhicule automobile ayant une interface homme machine comprenant un dispositif lumineux selon l'invention.

L'invention sera mieux comprise à la lumière de la description suivante qui n'est donnée qu'à titre indicatif qui n'a pas pour but de limiter l'invention, accompagné des figures ci-dessous :
- la figure 1 est une représentation schématique un dispositif lumineux selon l'invention,
- la figure 2 est une vue du dessus d'un dispositif lumineux selon l'invention,
- les figures 3 et 4 illustrent les guides de captage d'un dispositif selon l'invention,
- la figure 5 est une vue du dessus d'un dispositif selon l'invention,
- la figure 6 est une coupe selon l'axe AA du dispositif de la figure 5, et
- la figure 7 est une coupe selon l'axe BB du dispositif de la figure 5.

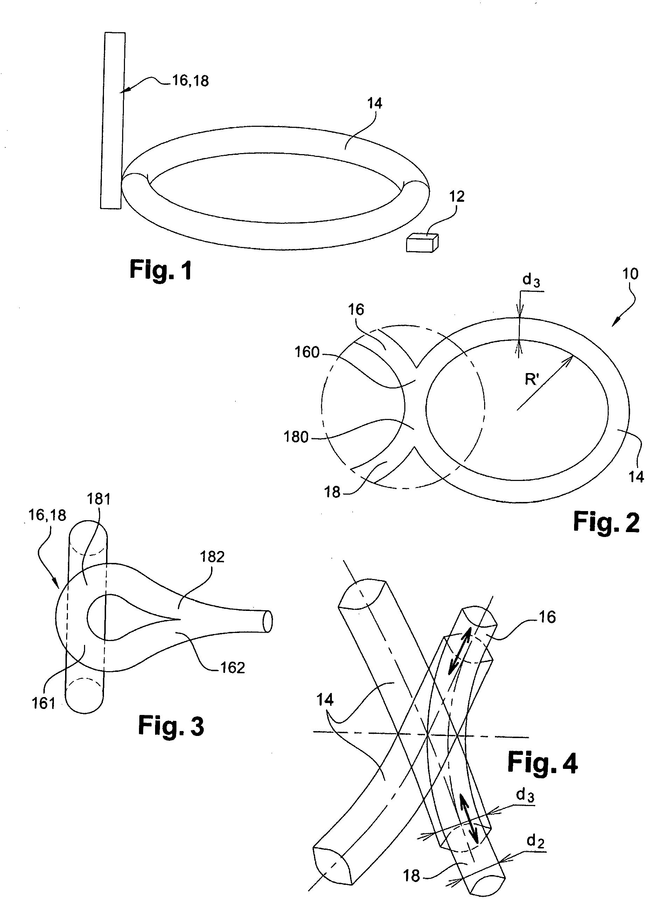

Comme illustré aux figures 1 et 2, l'invention concerne un dispositif lumineux 10 comprenant un collecteur de lumière 14 et deux guides de captage de lumière 16 et 18 associés au collecteur de lumière 14.

Le collecteur de lumière est configuré pour amener un faisceau de lumière issu de la source lumineuse 12 dans les guides de captage de lumière 16 et 18.

Ici, la source lumineuse 12 comprend une ou des diodes électroluminescentes, disposés par exemple sur un support de type PCB, en particulier un support de type substrat métallique isolé.

Le collecteur de lumière 14 et les deux guides de captage 16 et 18 sont de préférence monoblocs et formés d'une seule pièce. Ainsi, les rayons lumineux se propagent naturellement par réflexion totale à l'intérieur du collecteur de lumière 14 dans un premier temps, puis à l'intérieur des guides de captage dans un deuxième temps, sans obstacle ou séparation entre les parties du collecteur et les guides de captage qui pourrait nuire à sa circulation.

Comme représenté sur les figures, le collecteur de lumière 14 présente une symétrie de révolution et la source de lumière 12 est placée au niveau du collecteur de lumière 14. Avantageusement, le collecteur de lumière peut ainsi être entrainé en rotation autour de son axe de symétrie et toujours être disposé face à la source de lumière 12.

Avantageusement, le collecteur de lumière 14 est torique et peut présenter une section circulaire de sorte qu'un maximum de rayons lumineux se propageant dans le collecteur de lumière 14 soit totalement réfléchi maintenant ainsi un maximum de rayons lumineux dans le collecteur de lumière.

Le collecteur de lumière n'est pas limité à une section circulaire. Il peut avoir une section carrée, rectangulaire ou ovale. Cependant, ces formes sont moins favorables qu'une section circulaire favorisant une réflexion totale des rayons se propageant dans le collecteur de lumière.

Dans le cas d'une section circulaire et afin de conserver un maximum d'intensité du faisceau lumineux et d'éviter les pertes, le collecteur de lumière est configuré de sorte que R>4,5*d3 avec R le rayon intérieur du collecteur de lumière et d3 le diamètre de la section du collecteur.

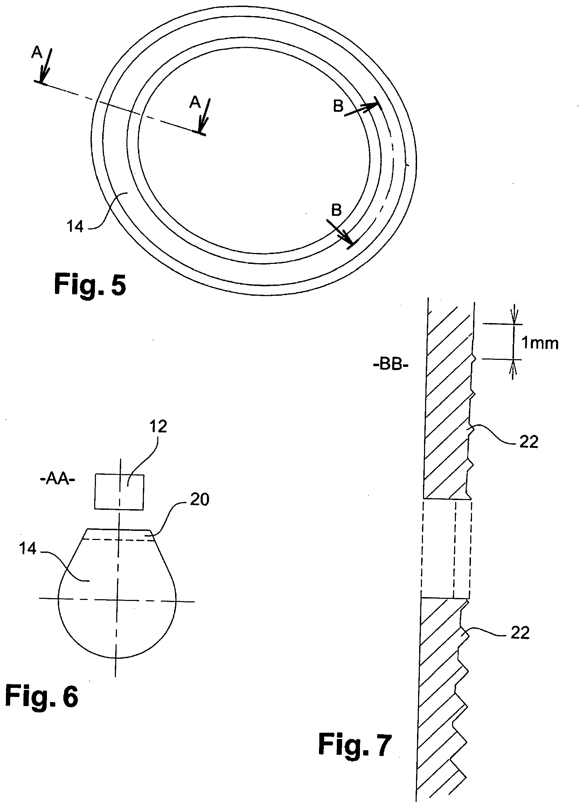

De préférence, comme illustré sur la figure 6, le collecteur de lumière 14 comprend un méplat 20 disposé du côté de la source de lumière 12. Avantageusement, la présence du méplat 20 permet à un maximum de rayons lumineux issus de la source de lumière 12 de pénétrer dans le collecteur de lumière 14.

Comme représenté sur la figure 7, le méplat 20 peut avantageusement comprendre des éléments dispersif 22 sous forme de prisme. Les éléments dispersifs 22 permettent d'augmenter encore le nombre de rayons lumineux issus de la source de lumière 12 pénétrant dans le collecteur de lumière 14.

Les prismes formant les éléments dispersif 22 sont de préférence radiaux au collecteur et présentent un angle au sommet d'environ 90°.

Le collecteur de lumière 14 comprend en outre des points de captage 160, 180 correspondant au point d'entrée des guides de captage 16 et 18 dans le collecteur de lumière 14.

Plus la source de lumière 12 est éloignée desdits points de captage 160, 180, plus il faut faire entrer de rayons lumineux issus de la source de lumière 12 dans le collecteur de lumière 14. En effet, les rayons lumineux doivent tourner dans le collecteur de lumière 14 pour rejoindre les points de captage 160 et 180. Ainsi, les pertes étant non nulles, plus le point d'entrée est loin des points de captage, plus il y a de pertes d'intensité.

Pour tenir compte de cette contrainte, les prismes composant les éléments dispersifs 22 ont des profondeurs différentes en fonction de leur distance aux points de captage 160 et 180. Plus l'on s'éloigne des points de captage 160 et 180, plus les prismes sont profonds. Selon un mode de réalisation la distance entre deux sommets de prismes contigus est d'environ 1 mm.

Les prismes formant éléments dispersifs 22 sont configurés de sorte à permettre aux rayons lumineux venant de l'extérieur du collecteur de lumière 14 de pénétrer dans ledit collecteur de lumière 14 et à réfléchir les rayons lumineux se propageant dans le collecteur de lumière 14. Avantageusement, les rayons lumineux étant entrés dans le collecteur de lumière sont piégés dans ledit collecteur 14. Par réflexions successives, lesdits rayons lumineux sont amenés à se propager dans le collecteur 14 jusqu'aux points de captage 160 et 180.

Comme illustré sur les figures 2 et 4, les guides de captage 16 et 18 sont munis d'une extrémité d'entrée 161 et 181 et d'une extrémité de sortie 162 et 182. Les deux guides de captage 16 et 18 sont conformés de sorte que les deux extrémités de sortie 162 et 182 se rejoignent formant ainsi un dioptre de sortie du dispositif lumineux selon l'invention.

Les extrémités d'entrée des guides de captage 161 et 181 pénètrent tangentiellement dans le collecteur de lumière 14 au niveau des points de captage 160 et 180.

Les guides de captage sont configurés se sorte que l'angle d'incidence et la courbure des guides de captage favorisent la réflexion totale des rayons lumineux issus du collecteur de lumière dans les guides de captage.

Ainsi, les rayons lumineux sortant du collecteur de lumière 14 se propagent dans les guides de captage de leur extrémité d'entrée 161 et 162 vers les extrémités de sortie 162 et 182 par réflexion totale.

De préférence, les guides de captage 16 et 18 présentent des sections circulaires de diamètre sensiblement égaux et inférieur au diamètre de la section circulaire du collecteur de lumière 14. L'axe principal de chacun des guides de captage 16 et 18 étant sensiblement parallèle à l'axe principal du collecteur de lumière 14 au niveau des points de captage 160 et 180.

Selon un mode de réalisation de l'invention, le rayon de courbure des guides de captage 16 et 18 au niveau de leurs extrémités d'entrée est supérieur à 4,5 fois le diamètre de la section du collecteur torique 14. Avantageusement, une telle configuration favorise la propagation des rayons lumineux dans le dispositif lumineux selon l'invention.

Comme illustré sur la figure 3, les points de captage forment un « Y » avec les deux guides de captage de lumière permettant de récupérer les rayons lumineux se propageant dans les deux directions dans le collecteur de lumière.

Avantageusement, la configuration du dispositif lumineux selon l'invention telle que représentée sur les figures, permet de l'utiliser comme index lumineux. En effet, le collecteur de lumière 14 ainsi que les guides de captage 16 et 18 peuvent être entraînés en rotation autour de l'axe de symétrie du collecteur 14, la source 12 restant fixe.

Afin de permettre au dispositif lumineux selon l'invention de servir d'index lumineux tournant, les guides de captage 16 et 18 s'étendent dans une direction sensiblement perpendiculaire au plan moyen du collecteur de lumière 14.

Une telle configuration du dispositif lumineux permet une bonne homogénéisation des faisceaux lumineux au niveau des extrémités de sortie 162 et 182 des guides de captage.

Selon un mode de réalisation, les extrémités de sortie des guides de captage peuvent comprendre des éléments dispersifs de lumière (non représentés) permettant d'augmenter le nombre de rayons lumineux sortant du dispositif lumineux au niveau des extrémités de sortie des guides de captage.

L'invention se rapporte également à un témoin lumineux destiné notamment à un tableau de commande d'un véhicule automobile comprenant un dispositif lumineux 10 selon l'invention ainsi qu'à un tableau de commande de véhicule automobile ayant une interface homme machine comprenant un dispositif lumineux selon l'invention.

Enfin, il est bien entendu que de nombreuses adaptations du dispositif lumineux 10 selon l'invention qui a été décrit en détail ci-dessus peuvent être introduites, tout en conservant certains au moins des avantages de l'invention.

## Revendications

1. Dispositif lumineux (10) comprenant :
- au moins une source de lumière (12),
- un collecteur de lumière (14),
- deux guides de captage de lumière (16, 18) associés au collecteur de lumière (14), **caractérisé en ce que**
- le collecteur de lumière (14) est conformé pour amener un faisceau de lumière issu de ladite au moins une source de lumière (12) dans les deux guides de captage de lumière (16, 18),
- chacun des guides de captage est muni d'une extrémité d'entrée (161, 181) pénétrant tangentiellement dans le collecteur de lumière (14) et d'une extrémité de sortie (162, 182),
- les deux guides de captage (16, 18) sont conformés de sorte que les deux extrémités de sortie (162, 182) se rejoignent formant un dioptre de sortie du dispositif lumineux et
- le collecteur de lumière (14) est torique et présente une symétrie de révolution et la source de lumière (12) est placée au niveau du collecteur de lumière (14), le collecteur de lumière (14) ainsi que les guides de captage (16, 18) pouvant être entraînés en rotation autour de l'axe de symétrie du collecteur (14), la source de lumière (12) restant fixe.

2. Dispositif lumineux selon la revendication 1, dans lequel le collecteur de lumière a une section circulaire.

3. Dispositif lumineux selon la revendication 2, dans lequel le collecteur de lumière est configuré de sorte que R>4,5*d3 avec R le rayon intérieur du collecteur de lumière et d3 le diamètre de la section du collecteur.

4. Dispositif lumineux selon l'une quelconque des revendications précédentes, dans lequel le collecteur comprend un méplat (20) disposé face à ladite au moins une source de lumière (12).

5. Dispositif lumineux selon la revendication 4, dans lequel le méplat du collecteur comprend des éléments dispersifs sous forme de prisme (22).

6. Dispositif lumineux selon la revendication 5, dans lequel les prismes sont radiaux au collecteur.

7. Dispositif lumineux selon l'une des revendications 5 ou 6, dans lequel les prismes ont un angle au sommet de 90°.

8. Dispositif lumineux selon l'une quelconque des revendications précédentes, dans lequel les guides de captages s'étendent dans une direction sensiblement perpendiculaire au plan moyen du collecteur de lumière.

9. Dispositif lumineux selon l'une quelconque des revendications précédentes, dans lequel les guides de captage ont des sections circulaires.

10. Dispositif lumineux selon la revendication 9, dans lequel les sections circulaires des guides de captage sont sensiblement de même diamètre.

11. Dispositif lumineux selon l'une des revendications 9 ou 10, la revendication 3 s'appliquant, dans lequel les diamètres des guides de captage sont inférieurs au diamètre du collecteur de lumière.

12. Dispositif lumineux selon l'une quelconque des revendications précédentes, la revendication 2 s'appliquant, dans lequel le rayon de courbure des guides de captage au niveau de leurs extrémités d'entrée est supérieur à 4,5 fois le diamètre de la section du collecteur.

13. Dispositif selon l'une quelconque des revendications précédentes, dans lequel ladite au moins une source lumineuse comprend au moins une diode électroluminescente disposée en regard du collecteur de lumière.

14. Dispositif lumineux selon l'une quelconque des revendications précédentes, dans lequel le collecteur de lumière et les guides de captage sont monoblocs.

15. Témoin lumineux destiné notamment à un tableau de commande d'un véhicule automobile comprenant un dispositif lumineux selon l'une quelconque des revendications précédentes.

16. Tableau de commande de véhicule automobile ayant une interface homme machine comprenant un dispositif lumineux selon l'une des revendications 1 à 14.

## Patentansprüche

1. Beleuchtungsvorrichtung (10), umfassend:
- mindestens eine Lichtquelle (12),
- einen Lichtkollektor (14),
- zwei Leiter zum Einfangen von Licht (16, 18), die dem Lichtkollektor (14) zugeordnet sind, **dadurch gekennzeichnet, dass**
- der Lichtkollektor (14) ausgeformt ist, um einen Lichtstrahl ausgehend aus der mindestens einen Lichtquelle (12) in die beiden Leiter zum Einfangen von Licht (16, 18) zu führen,
- jeder der Leiter zum Einfangen mit einem Eingangsende (161, 181), das tangential in den Lichtkollektor (14) eindringt, und einem Ausgangsende (162, 182) versehen ist,
- die beiden Leiter zum Einfangen (16, 18) ausgeformt sind, sodass sich die beiden Ausgangsenden (162, 182) annähern und eine Ausgangsdioptrie der Beleuchtungsvorrichtung bilden,
- der Lichtkollektor (14) torisch ist und eine Rotationssymmetrie aufweist und die Lichtquelle (12) im Bereich des Lichtkollektors (14) platziert ist, wobei der Lichtkollektor (14), sowie die Leiter zum Einfangen (16, 18) um die Symmetrieachse des Kollektors (14) in Rotation versetzt werden können, wobei die Lichtquelle (12) feststehend bleibt.

2. Beleuchtungsvorrichtung nach Anspruch 1, wobei der Lichtkollektor einen kreisförmigen Querschnitt aufweist.

3. Beleuchtungsvorrichtung nach Anspruch 2, wobei der Lichtkollektor konfiguriert ist, sodass R>4,5*d3 ist, mit R als Innenradius des Lichtkollektors und d3 als Durchmesser des Querschnitts des Kollektors.

4. Beleuchtungsvorrichtung nach einem der vorstehenden Ansprüche, wobei der Kollektor eine Abflachung (20) umfasst, die gegenüber der mindestens einen Lichtquelle (12) angeordnet ist.

5. Beleuchtungsvorrichtung nach Anspruch 4, wobei die Abflachung des Kollektors dispersive Elemente in Prismenform (22) umfasst.

6. Beleuchtungsvorrichtung nach Anspruch 5, wobei die Prismen radial zum Kollektor sind.

7. Beleuchtungsvorrichtung nach einem der Ansprüche 5 oder 6, wobei die Prismen einen Winkel an der Spitze von 90° aufweisen.

8. Beleuchtungsvorrichtung nach einem der vorstehenden Ansprüche, wobei sich die Leiter zum Einfangen in eine Richtung in etwa senkrecht zu einer mittleren Ebene des Lichtkollektors erstrecken.

9. Beleuchtungsvorrichtung nach einem der vorstehenden Ansprüche, wobei die Leiter zum Einfangen kreisförmige Querschnitte aufweisen.

10. Beleuchtungsvorrichtung nach Anspruch 9, wobei die kreisförmigen Querschnitte der Leiter zum Einfangen in etwa denselben Durchmesser aufweisen.

11. Beleuchtungsvorrichtung nach einem der Ansprüche 9 oder 10, mit Anwendung von Anspruch 3, wobei die Durchmesser der Leiter zum Einfangen kleiner sind, als der Durchmesser des Lichtkollektors.

12. Beleuchtungsvorrichtung nach einem der vorstehenden Ansprüche, mit Anwendung von Anspruch 2, wobei der Krümmungsradius der Leiter zum Einfangen im Bereich ihrer Eingangsenden größer als 4,5 Mal dem Durchmesser des Querschnitts des Kollektors ist.

13. Beleuchtungsvorrichtung nach einem der vorstehenden Ansprüche, wobei die mindestens eine Lichtquelle mindestens eine elektrolumineszierende Diode umfasst, die gegenüber dem Lichtkollektor angeordnet ist.

14. Beleuchtungsvorrichtung nach einem der vorstehenden Ansprüche, wobei der Lichtkollektor und die Leiter zum Einfangen in einem Stück ausgeführt sind.

15. Leuchtanzeige, die vor allem für ein Armaturenbrett eines Kraftfahrzeugs bestimmt ist, eine Beleuchtungsvorrichtung nach einem der vorstehenden Ansprüche umfassend.

16. Armaturenbrett eines Kraftfahrzeugs, das eine Mensch-Maschinen-Schnittstelle aufweist, eine Beleuchtungsvorrichtung nach einem der Ansprüche 1 bis 14 umfassend.

## Claims

1. A lighting device (10) comprising:
- at least one light source (12),
- a light collector (14),
- two light-capturing guides (16, 18) associated with the light collector (14),
**characterized in that**
- the light collector (14) is shaped so as to introduce a light beam from said at least one light source (12) into the two light-capturing guides (16, 18),
- each of the capturing guides has an input end (161, 181) that passes tangentially into the light collector (14), and an output end (162, 182),
- the two capturing guides (16, 18) are shaped such that the two output ends (162, 182) merge so as to form an output diopter from the lighting device, and
- the light collector (14) is toroidal and rotationally symmetrical, and the light source (12) is positioned in the region of the light collector (14), the light collector (14) and the capturing guides (16, 18) being able to be rotated about the axis of symmetry of the collector (14), the light source (12) remaining stationary.

2. The lighting device according to claim 1, wherein the light collector has a circular cross section.

3. The lighting device according to claim 2, wherein the light collector is designed such that R > 4.5*d3, where R is the inner radius of the light collector, and d3 is the diameter of the collector cross section.

4. The lighting device according to any of the preceding claims, wherein the collector comprises a flattened region (20) arranged opposite said at least one light source (12).

5. The lighting device according to claim 4, wherein the flattened region of the collector comprises dispersive elements in the form of prisms (22).

6. The lighting device according to claim 5, wherein the prisms are radial with respect to the collector.

7. The lighting device according to either claim 5 or claim 6, wherein the prisms have a vertex angle of 90°.

8. The lighting device according to any of the preceding claims, wherein the capturing guides extend in a direction substantially perpendicular to the median plane of the light collector.

9. The lighting device according to any of the preceding claims, wherein the capturing guides have circular cross sections.

10. The lighting device according to claim 9, wherein the circular cross sections of the capturing guides are substantially of the same diameter.

11. The lighting device according to either claim 9 or claim 10, claim 3 being applicable, wherein the diameters of the capturing guides are less than the diameter of the light collector.

12. The lighting device according to any of the preceding claims, claim 2 being applicable, wherein the radius of curvature of the capturing guides at the ends thereof is greater than 4.5 times the diameter of the collector cross section.

13. The device according to any of the preceding claims, wherein said at least one light source comprises at least one light-emitting diode arranged opposite the light collector.

14. The lighting device according to any of the preceding claims, wherein the light collector and the capturing guides are integral.

15. The lighting device notably for a dashboard of a motor vehicle comprising a light device according to any of the preceding claims.

16. Motor vehicle dashboard having a man-machine interface comprising a light device according to any one of the claims 1 to 14.
